# EUROPEAN PATENT SPECIFICATION

(11) **EP 2 796 709 B1**
(45) Date of publication and mention of the grant of the patent: **13.03.2019**
(21) Application number: 13164914.7
(22) Date of filing: 23.04.2013
(51) Int. Cl.: F03D 1/00

(54) **Wind turbine blade holding arrangement**
Windturbinenschaufelhalteanordnung
Agencement de retenue de pale de turbine éolienne

(43) Date of publication of application: 29.10.2014
(73) Proprietor: Siemens Aktiengesellschaft, 80333 München (DE)
(72) Inventor: Lieberknecht, Kim, 8200 Århus N (DK); Mastrup, Aage, 6971 Spjald (DK); Svinth, Kenneth Helligsoe, 8000 Aarhus C (DK); Wieland, Maja Rose, 8220 Brabrand (DK)

(56) References cited:
- EP-A1- 2 213 587
- EP-A1- 2 418 376
- EP-A2- 2 239 459
- WO-A1-2012/163358

## Description

The invention describes a wind turbine blade holding arrangement, and a method of handling a number of wind turbine blades.

Rotor blades for wind turbines can be very long, easily reaching lengths of 100 m or more for the larger wind turbines. The shape of a wind turbine rotor blade is quite complex, comprising an airfoil portion and also a circular root end portion for mounting to the hub of the wind turbine. The airfoil portion can be quite wide at the root end, and usually tapers to a fairly thin tip. It is important to transport such blades without damage from a factory site to an installation site, since any surface damage detracts from the blade's aerodynamic performance and can result in costly repairs. EP 2 418 376 A1 discloses a blade transportation and storage system in which rotor blades are held vertically, i.e. with the blade's trailing edge pointing upwards, during all transportation and storage stages. Measures to protect the blades during handling and transport contribute significantly to the overall cost of a wind turbine. Furthermore, because of their complex shape and because of the size of the conventional supporting arrangements that must be used for support and protection during transport, only a relatively small number of blades can fit into standard transport facilities such as containers, or into transport vehicles or vessels with standard container size.

The same considerations apply to short-term or long-term storage of blades. Here also, space is associated with cost, and the large volume occupied by the blades and any supporting or protective structures results in higher overall costs.

Another cost factor is given by the need to use an initial type of support apparatus for storing blades after their manufacture (for example racks or shelves at the manufacturers site); a further type of support apparatus for marine or road transport (for example cradles and/or frames in a transport vessel); and yet another type of support apparatus for interim storage before mounting to the hub of a wind turbine (for example shelves at an owner site), for example as disclosed in the blade transport system of EP 2 239 459 A2, which requires various different handling components. A considerable cost factor is the transfer of blades from one support apparatus to another, since the blades must be dismounted from one apparatus and moved or lifted - taking due care not to damage the blade - to the next apparatus. The risk of blade damage increases with every transfer step.

It is therefore an object of the invention to provide an improved blade handling apparatus, avoiding the disadvantages outlined above.

This object is achieved by the wind turbine blade holding arrangement of claim 1; and by the method of claim 12 of handling a number of wind turbine blades.

According to the invention, the wind turbine blade holding arrangement comprises a root frame for securing to a root portion of a blade; an airfoil clamp for arranging about an airfoil portion of the blade; and an airfoil frame for supporting the airfoil clamp; wherein the root frame and tip clamp are realised for use in a vertical blade orientation in a first storage and transport stage of the blade and also for use in a horizontal blade orientation in a second storage and transport stage of the blade, wherein the horizontal and vertical blade orientations are distinct from each other.

Here, the term "storage and transport stage" is to be understood to mean any stage between the point in time at which the blade manufacture and finishing steps are complete, to the point in time at which the blade is ready to be installed on a wind turbine. A rotor blade manufacturing site can be remote from the wind turbine installation site. Usually, long distances by road, rail and ship must be covered between the manufacturer and the onshore or offshore installation site. Therefore, it may be necessary to store a blade for some time before it can be shipped (i.e. transported from one location to another), then it must be loaded for shipping. During transport, it may be necessary to unload and load the blade one or more times, for example from a road transport vehicle to a transport vessel. These are all various "storage and transport stages" during which the blade must be handled and moved in a safe and secure manner.

An advantage of the wind turbine blade holding arrangement according to the invention is that it can be used throughout all storage and transport stages of a blade, from the time the blade manufacture and finishing steps are complete, to the time the blade is installed on a wind turbine, and can be adapted to different blade orientation requirements. Various elements of the holding arrangement remain secured to the blade throughout, even for distinctly different blade orientations or positions, until the blade is ready to be mounted to the hub of the wind turbine. Instead of having to transfer the blade from a storage holding means (which may require, for example, a "horizontal" blade orientation) to a different transport holding means (which may require, for example, a "vertical" blade orientation), the single holding arrangement according to the invention can be used throughout. Since a blade must pass through several storage and transport stages between manufacture and installation, the holding arrangement according to the invention offers a considerable saving in cost, since elements of the holding arrangement remain attached to the blade throughout its entire storage and transport phase, and since all storage and transport steps make use of the elements of the holding arrangement. Furthermore, since there is no need to transfer the blade between different types of holding equipment, the reduction in the number of handling steps means that there is also less risk of damage to the blades. This also contributes to a reduction in overall wind turbine cost.

According to the invention, the method of handling a number of wind turbine blades comprises the steps of securing a root frame to a root end of a blade; arranging a tip clamp about an airfoil portion of the blade; and mounting the tip clamp onto a tip frame; which method comprises arranging the root frame in a vertical blade orientation in a first storage and transport stage of the blade; and arranging the root frame in a horizontal blade orientation in a second storage and transport stage of the blade; wherein the horizontal and vertical blade orientations are spatially significantly distinct or different from each other.

An advantage of the handling method according to the invention is that the handling steps in the storage and transport stages between manufacture and installation of the blade are reduced to a favourable minimum, while ensuring at the same time that the blade is always safely and securely held.

Particularly advantageous embodiments and features of the invention are given by the dependent claims, as revealed in the following description. Features of different claim categories may be combined as appropriate to give further embodiments not described herein.

The handling or holding arrangement according to the invention can be adapted to securely hold any type or shape of blade during transport and storage. In the following, but without restricting the invention in any way, it may be assumed that a wind turbine blade comprises an essentially circular root portion and an airfoil portion, with a shoulder or transition region between these. Of course, the root frame can easily be realised to fit about a root portion that has a non-circular shape, for example an elliptical shape or other complex shape.

As mentioned above, the holding arrangement according to the invention can hold the blade in blade orientations that are distinct from each other. For example, first and second blade orientations may be essentially at right angles to each other. Of course, the first and second blade orientations may differ by any suitable angle. In the following, without restricting the invention in any way, it may be assumed for simplicity that the first and second blade orientations are at right angles to each other.

The airfoil clamp is preferably arranged about the flatter airfoil section of the blade at point someway beyond the blade middle and towards the tip, so that the weight of the blade is optimally supported at two points (by the root frame at one point, and by the airfoil frame and airfoil clamp at another point). In the following therefore, without restricting the invention in any way, the airfoil clamp may also be referred to as a "tip clamp", and the airfoil frame may be referred to as a "tip frame".

After a manufacturing stage, prior to moving the blade to storage or transport, the blade may need to be "parked" for a while. This may also be the case after unloading the blade at a final destination. Therefore, in a particularly preferred embodiment of the invention, the holding arrangement also comprises a root end foot realised to support the root portion of the blade. This root end foot is preferably shaped to match a portion of the root end, so that it can be placed between the root end and the ground. The blade can then rest securely on the root end foot. In such a "parking" position or vertical blade orientation, the blade is preferably arranged so that its shoulder and airfoil portion face vertically upward, which is a stable position for the blade and also occupies less space.

Preferably, such a root end foot comprises some means with which it can be secured to the root end, so that it remains in place even if the blade is lifted and/or turned from its "parked" position. To mount a blade to the hub of a wind turbine, pinbolts are usually threaded into bushings embedded in the root region of the blade and left to protrude to a certain extent. These pinbolts can then be inserted into corresponding bushings in a circular hub connector, for example to a pitch bearing. Therefore, in a further preferred embodiment of the invention, the root end foot comprises bolt cover portions realised for mounting over already installed and protruding pinbolts of the root end of the blade. For example, a root end foot may comprise two sections with protruding tubular bolt covers that fit over a number of neighbouring pinbolts. This can be sufficient to ensure that the root end foot stays in place. The root end foot may be screwed onto the root end. The root end foot can be made of some suitable material such as steel, and can be made quite economically, for example it can be cast in one piece.

The root frame can be secured in any suitable way to the root end of the blade. Preferably, the root frame is secured to the root end so that the root frame and root end can be handled as a single entity. Therefore, in a particularly preferred embodiment of the invention, the root frame comprises a number of root end brackets realised for securing the root frame to the root end of the blade, using a number of "empty" pinbolt bushings about a mounting face of the root end. The invention makes use of the fact that pinbolt bushings of the blade root end provide a very stable connecting means for an alternative component, in this case the root frame. Connecting brackets are attached to the root frame, with openings that coincide with the positions of several empty pinbolt bushings. Suitable fasteners can be inserted through these openings and into the empty pinbolt bushings, and subsequently tightened.

As indicated above, it would be advantageous if the root end foot could stay mounted to the blade so that it can be used in both a first "parking" stage, during which the weight of the root end is carried by the root end foot, and a final "parking" stage of the blade during which the weight of the root end is carried by the root frame. Therefore, in a further preferred embodiment of the invention, the root frame is realised to accommodate the root end foot, i.e. the root frame can be constructed to fit about the root end foot. Equally, the root end foot can be shaped to fit "into" the root frame. Then, the root frame and blade can be turned from a first position (in which the root end was resting on the root end foot) to a second position (in which the root end is held only by the root frame), without having to remove the root end foot, since this does not protrude beyond the root frame. This can be used again later, for example when the root frame is removed, and the weight of the blade can once again be carried at the root end by the root end foot.

When wind turbine blades are stored, it is preferable to arrange them in layers, for example in a storage hall or in the hold of a transport vessel. Conventional methods involve lifting and moving each blade from a supporting apparatus (such as a cradle) onto a shelf or rack. The invention takes a different approach, namely that of using one type of equipment or apparatus to fulfil several storage and transport functions. In a particularly preferred embodiment of the invention, a frame is realised to be stacked on a further frame of the same type. For instance, a root frame can be arranged on another root frame, so that a root frame stack can be built. Similarly, a tip frame can be arranged on another tip frame, so that a tip frame stack can be built.

To facilitate ease of stacking, the tip clamp and root frame preferably comprise a number of connecting means for connecting to a lifting apparatus, for example for connecting to a cable or rope of a crane that is used to lift the blade and its tip clamp and root frame from one position to another. Once in the air, the cables can be manipulated to turn the root frame and tip clamp, for example through one quarter turn. A winch could be used to achieve the desired degree of rotation. After turning, the root frame and tip clamp are in a "horizontal" position or blade orientation, since the airfoil and shoulder portions of the blade are essentially lying "flat". The horizontal arrangement can then be lowered into place on a waiting tip frame, and the tip clamp can be dropped into the tip frame and secured to this. Thereafter, the blade with tip clamp, tip frame and root frame can be lifted again and moved to a new location. For example, the entire arrangement can be lifted as it is and lowered onto a flatbed lorry or railcar, ready for transport to a new location. Equally, the entire arrangement can be lifted as it is and lowered onto a stack of previously assembled blade and frame arrangements to form a "blade stack", in which all tip frames are arranged in a vertical "tip frame stack", and all root frames are arranged in a vertical "root frame stack".

For ease of assembly when a blade stack is being formed, the uprights of a frame are preferably shaped to easily fit over the uprights of the lower frame. To this end, a tip frame or root frame preferably comprises a first interface portion for connecting with a second interface portion of a corresponding frame, so that the frames can be connected to each other. For example, the uprights of a frame can be shaped so that the top corners are tapered or pointed to fit into correspondingly formed bottom corners of the next frame in the stack. A locking device such as a locking pin or clamp can be implemented to lock the vertically aligned uprights of the stacked frames.

It is also important to secure an entire stack to the floor of the transport and/or storage facility. To this end, the holding arrangement according to the invention preferably comprises one or more mounting "feet" or mounting brackets realised for mounting to a surface of a transport means and/or a storage facility. Such feet or brackets can be secured to the ground, and spaced so that the uprights of a frame fit over the brackets. A mounting foot can be welded in place, or can be removably secured using a suitable locking device such as a twist-lock mechanism. Preferably, the mounting feet and the frames are realised to be connected together in a secure manner, for example by using a locking pin passed through a frame upright and a barrel or cylinder of the mounting foot.

The uprights of a frame are preferably shaped to easily fit over and onto the mounting feet. Therefore, in a preferred embodiment of the invention, a mounting foot preferably comprises a mounting portion corresponding in shape to a frame interface portion of a frame. In this way, each frame can be used in any position in the stack, for example each tip frame can be used as the lowest tip frame secured to mounting feet on the ground, or as any intermediate tip frame that is mounted onto another lower tip frame, etc. No distinction need be made, i.e. any frame can be used at any position in its stack.

In another preferred embodiment, the holding arrangement comprises one or more connecting struts for connecting adjacent frames, for example for connecting adjacent root frames. In this way, additional lateral stability can be ensured, especially during sea transport.

The compact realisation of the root frames and tip frames means that blades can be stacked in relatively narrow blade stacks with a favourable economy of space. Furthermore, since the frames need not extend to any significant extent beyond the contour or profile of a blade, it is possible to arrange vertical blade stacks in an interleaved manner in a close and compact array. For example, the stacks can be formed such that the airfoils of one stack of blades can face toward the root portions of a neighbouring parallel blade stack. Blade stacks can be arranged progressively in this alternating manner to give an interleaved array with two opposite arrangements of root frames, and two arrangements of tip frames in between, so that, effectively, twice as many tip frames are accommodated in the space occupied by one root frame "array". The root frame stacks can be connected using struts as mentioned above. To obtain an optimal packing density, the combined width of a root frame and a connecting strut can correspond essentially to the width of two tip frames.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a blade in a first storage stage, supported by a root end foot and a tip clamp of a holding arrangement according to an embodiment of the invention;
Fig. 2 shows the blade of Fig. 1, supported also by a root frame;
Fig. 3 shows the blade of Figs. 1 and 2 during a lifting step;
Fig. 4 shows a tip clamp and a tip frame of a holding arrangement according to an embodiment of the invention;
Fig. 5 shows a detail of frame of a holding arrangement according to an embodiment of the invention;
Fig. 6 shows a blade during a road transport stage, supported by a holding arrangement according to an embodiment of the invention;
Fig. 7 shows a vertical stack of blades supported by a holding arrangement according to an embodiment of the invention;
Fig. 8 shows an array of the vertical stacks of Fig. 7;
Fig. 9 shows the array of Fig. 8 arranged on a container vessel for sea transport.

In the diagrams, like numbers refer to like objects throughout. Objects in the diagrams are not necessarily drawn to scale.

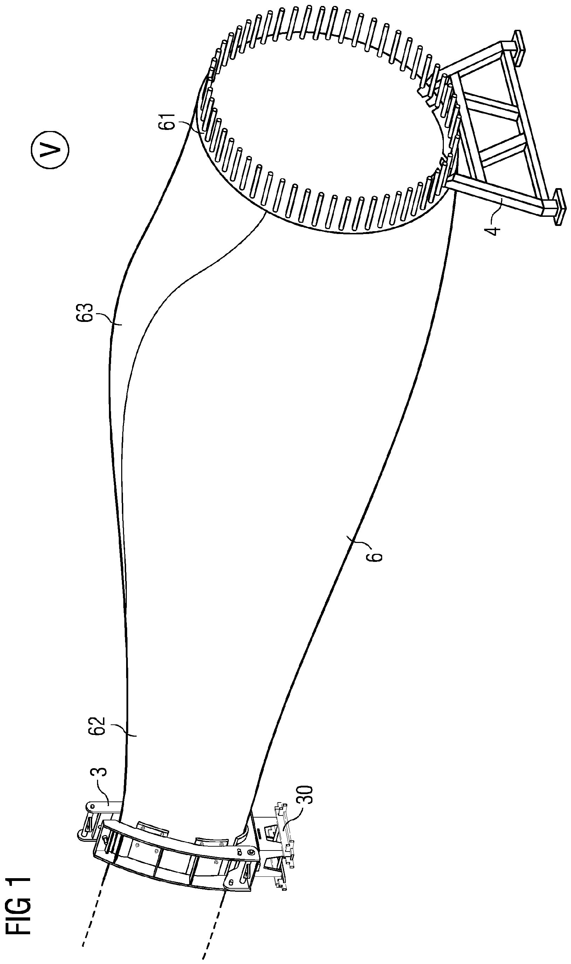

Fig. 1 shows a blade 6 in a first storage stage, supported by a root end foot 4 and a tip clamp 3 of a holding arrangement according to an embodiment of the invention. In this basic configuration, the root end 61 is being supported by the root end foot 4, and the blade's airfoil portion 62 is being supported in an airfoil clamp 3 or "tip clamp" 3. This position or blade orientation may be required for a while between the manufacturing and transport phases. The root end foot 4 is secured to the root end 61 using several of the already mounted bolts 610 protruding from the root end 61, which will later be used to mount the blade 6 to the hub of a wind turbine. To this end, the root end foot 4 includes a planar portion with a number of rigid protruding tubes that are arranged to coincide with the positions of certain pinbolts 610. The planar portion of the root end foot 4 lies against a planar surface of the root end. The root end foot 4 is compact and economical, since it does not need to extend around the entire root portion 61. Even so, the sturdy shape of the root end foot 4 means that it can hold the blade 6 securely. To this end, the root end foot 4 has relatively wide flat portions shaped to rest firmly on a horizontal surface such as the ground, or the interior of a lorry, container, railcar etc, as will be shown later. The tip clamp 3 or airfoil clamp 3 comprises two hinged parts or "jaws" 31 that are shaped to conform to the airfoil shape of the blade 6 at a distance along its length, for example at a point between the blade middle and the blade tip. The shape of the tip clamp 3 ensures that the blade 6 can be held securely without being scratched or dented, and the blade 6 is further protected by a number of pads 32. The tip clamp 3 is in turn mounted to a foot 30, which is realised to rest firmly on a horizontal surface such as the ground, or the interior of a lorry, container, railcar, etc.

In this initial stage, the shoulder portion 63 of the blade points upward in a "vertical" blade orientation V, and the remainder of the airfoil 61 is also essentially vertical. The tip clamp 3 and the root end foot 4 are mounted after manufacture of the blade 6 has been completed, and remain on the blade 6 during all subsequent transport and storage stages, as will become clear in the following. At this stage, as shown in the diagram, the tip clamp 3 is in a "vertical" position V or blade orientation, pointing upwards.

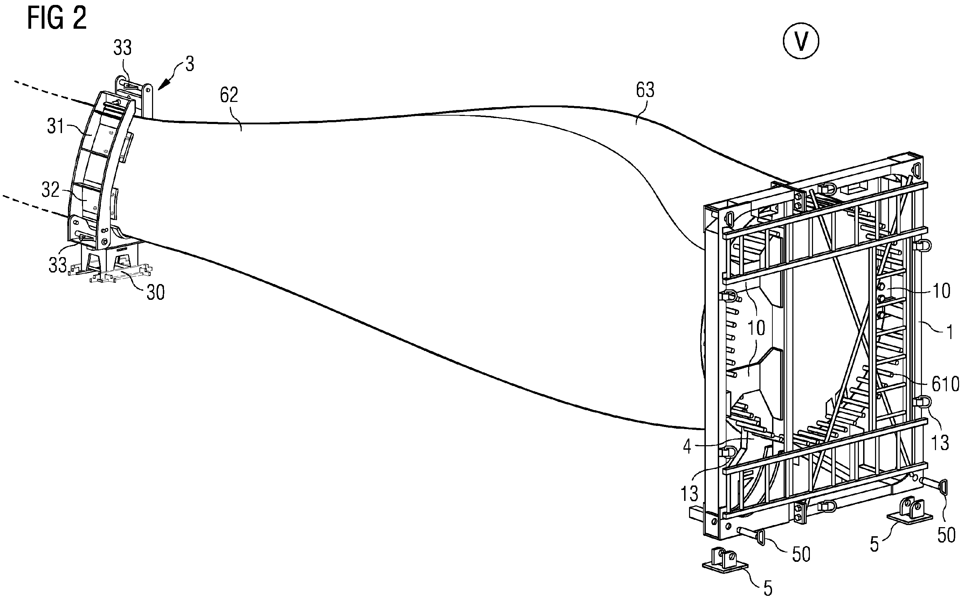

Fig. 2 shows the blade 6 of Fig. 1, supported also by a root frame 1. The blade shoulder 63 is pointing upwards, and the root frame 1 is in the corresponding "vertical" position as indicated by the "V" in the diagram. The root end foot 4 and root frame 1 are designed so that the root end frame 1 can be fitted over the root end foot 4. The root end frame 1 is shaped to fit about the root end 61 of the blade 6, and comprises root end brackets 10 that fit into certain spaces along the bolt ring of the root end 61 in which no pinbolts have been inserted. In this exemplary embodiment, the root end frame 1 is secured to the root end 61 by inserting fasteners through the brackets 10 and into empty pinbolt bushings. For stability, the root frame 1 can be placed over mounting feet 5, which can have a wider base to provide support. The mounting feet 5 can be permanently or temporarily secured to a surface such as a storage facility floor, a truck interior, a storage vessel interior, etc., as will be explained below. The root frame 1 can be secured to the mounting feet 5 using a suitable connecting means such as a locking pin 50. Both root frame 1 and tip clamp 3 have a number of lifting eyelets 13, 33, to which lifting tackle such as a crane cable can be connected.

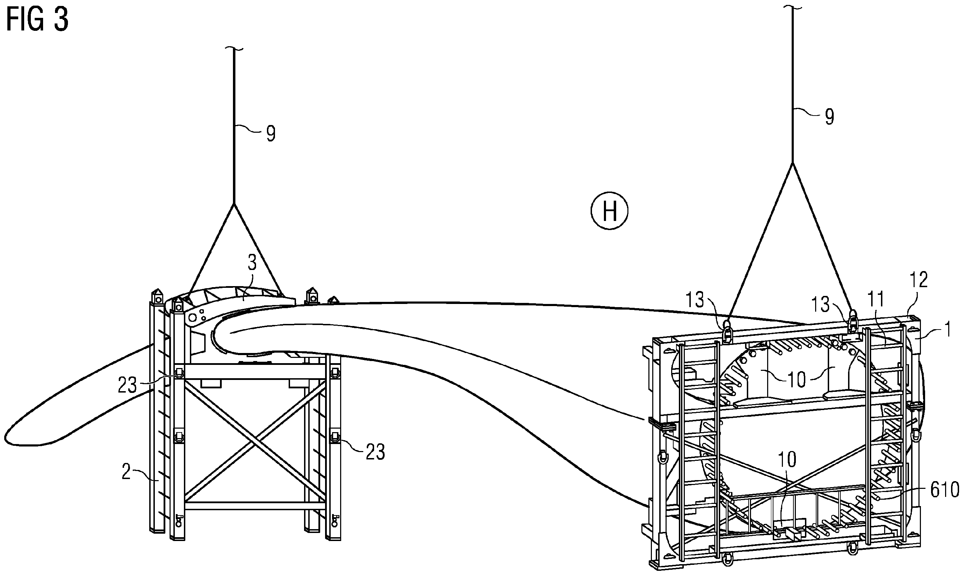

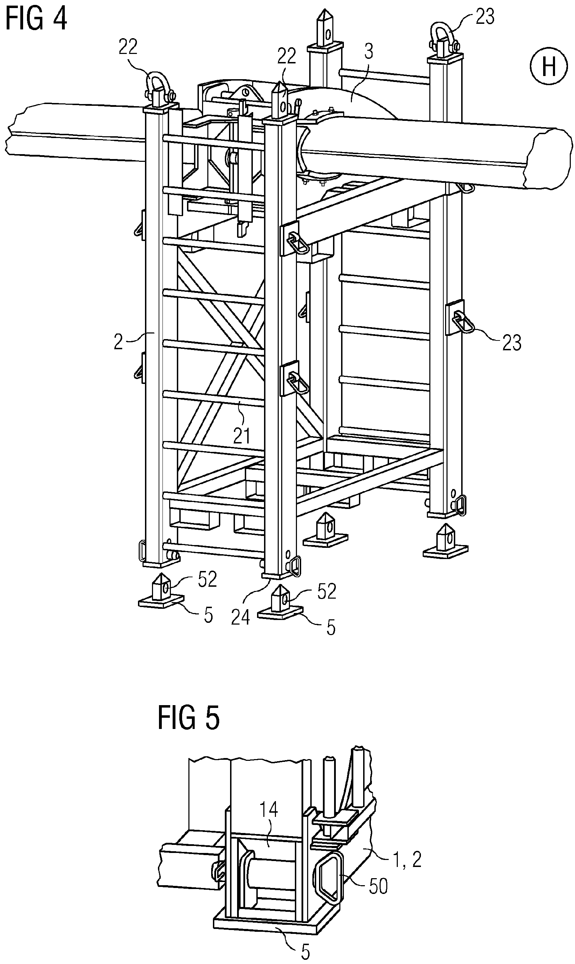

Fig. 3 shows the blade 6 of Figs. 1 and 2 during a lifting step. Here, cables 9 are connected to the lifting eyelets 13, 33 of the tip clamp 3 and root frame 1. When the blade 6 (with tip clamp 3 and root frame 1) is suspended in the air, the cables 9 can be adjusted to turn the blade 6 one quarter turn, so that the blade shoulder 63 lies more or less flat. The root frame 1, since it is secured to the root portion 61 of the blade 6, has also been rotated, and is now in the corresponding "horizontal" position as indicated by the "H" in the diagram. The blade 6 is lowered into place over a tip frame 2 which has been previously arranged in place. Fig. 4 shows a tip clamp 3 also in its "horizontal" position on a tip frame 2 of the holding arrangement. The diagram shows that the tip clamp 3 and the clamp foot 30 are dimensioned to fit within the upper portion of the tip frame 2. The tip frame 2 also has various lifting eyelets 23 for a later transport step. The tip frame 2 is also realised to fit onto mounting feet 5. A mounting foot 5 can have a tapered top part, shaped to facilitate ease of placement of a tip frame 2. Similarly, the uprights of a tip frame 2 can have tapered points so that another tip frame 2 can easily be stacked onto it.

Fig. 5 shows a detail of a root frame 1, showing how a corner of a frame 1, 2 can fit over a mounting foot 5. Suitable bores in the side portions of the root frame 1 or tip frame 2 allow a locking pin 50 to be passed through a corresponding barrel or cylinder of the mounting foot 5.

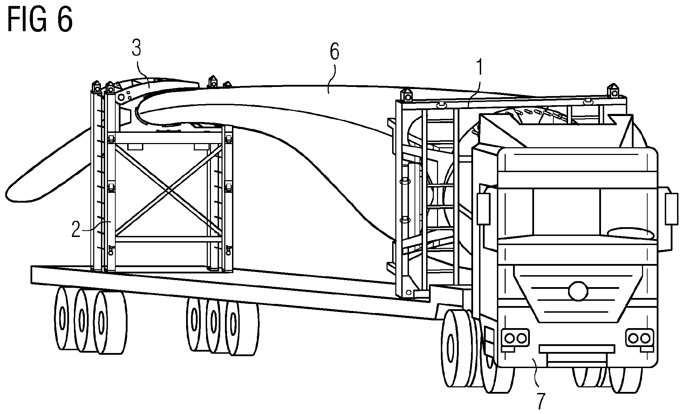

Fig. 6 shows a blade 6 during a road transport stage, supported by a holding arrangement 1, 2, 3 according to an embodiment of the invention. The blade 6 can have been lifted into place onto a lorry 7 with the root frame 1 and tip frame 2 (and clamp 3) already in place, using a crane, and cables connected to the lifting eyelets. The diagram shows that the root frame 1 and tip frame 2 are dimensioned to fit onto a flatbed of the lorry 7. Mounting feet 5 are welded or otherwise secured to the flatbed, and connected to the frames 1, 2, ensure that the blade is securely held during the road transport stage. Of course, this arrangement is equally applicable to rail transport.

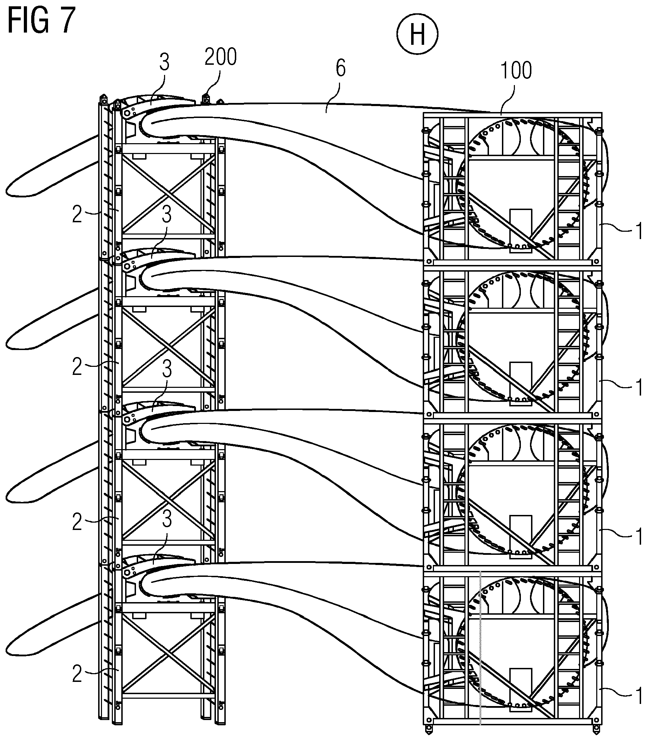

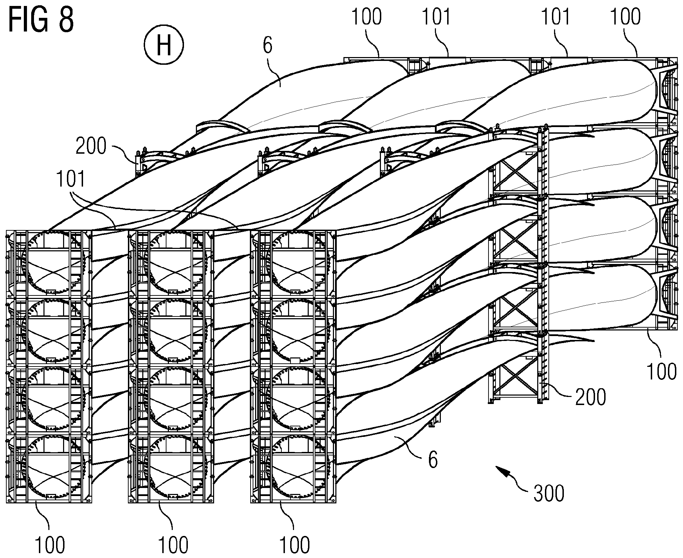

The root frame 1 and tip frame 2 allow blades to be stacked in a favourably practical manner for storage and transport. Fig. 7 shows a vertical stack of blades supported by a holding arrangement 1, 2, 3 according to an embodiment of the invention. Here, four blades 6 are each held in a root frame 1, and a tip frame 2 with tip clamp 3, and the frames 1, 2 are stacked one above the other. The uprights of the frames 1, 2 can be secured to each other using a locking arrangement, for example locking pins such as those shown in Fig. 5. The lowest root frame 1 and tip frame 2 can be secured to the ground using mounting feet 5 and locking pins, also as shown in Fig. 5. Four root frames 1 thus form a vertical root frame stack 100, while four tip frames 2 form a vertical tip frame stack 200. Such vertical stacks 100, 200 can be combined in an array. For example, eight blades can be arranged in two vertical stacked arrangements of the type shown in Fig. 7. Alternatively, in a very efficient arrangement, arrays of vertical stacks 100, 200 can be "interleaved". Fig. 8 shows such an array 300 comprising two interleaved arrays of twelve blades, stacked in three vertical four-blade stacks 100, 200 as shown in Fig. 7. The two twelve-blade arrays are arranged so that the twelve blade tips of one array point toward the root ends of the other array. This is made possible by the overall narrow dimensions of the tip frames 2 and root frames 1, which do not extend to any significant extent beyond the blades themselves. For additional stability, the uppermost root frames 1 can be secured by struts 101 connected between the uprights of adjacent root frames 1.

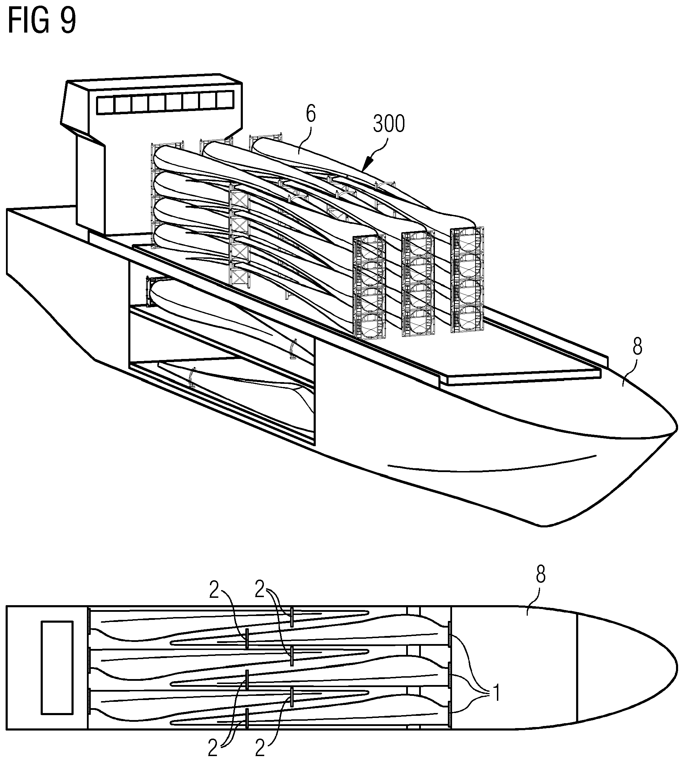

Fig. 9 shows the array 300 of Fig. 8 arranged on a container vessel 8 for sea transport, for example to an offshore wind park installation. The diagram illustrates that a relatively large number of blades 6 can be accommodated on the vessel 8. Such a vessel 8 is usually dimensioned to carry a specific number of standard containers. A three-dimensional array of standard containers usually fills the rectangular volume of the loading space more or less exactly, i.e. with little or no "room to spare" at the sides. The diagram shows that the 24-blade interleaved array fills such a rectangular volume. This is made possible by dimensioning the root frames 1, tip frames 2 and connecting struts 101 appropriately. For example, the combined width of three root frames 1 and two struts 101 is chosen to correspond to an integer multiple of a container width. Similarly, the combined width of six tip frames 2 corresponds to the same container width integer multiple.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind turbine blade holding arrangement (1, 2, 3) comprising
- a root frame (1) for securing to a root portion (61) of a blade (6);
- an airfoil clamp (3) for arranging about an airfoil portion (62) of the blade (6); and
- an airfoil frame (2) for supporting the airfoil clamp (3);
**characterized in that** the root frame (1) and airfoil clamp (3) are realised for use in a vertical blade orientation (V) in a first storage and/or transport stage of the blade (6) and also for use in a horizontal blade orientation (H) in a second storage and/or transport stage of the blade (6), wherein the horizontal and vertical blade orientations (H, V) are essentially at right angles to each other.

2. A holding arrangement according to claim 1, wherein the root frame (1) comprises a number of root end brackets (10) realised for securing the root frame (1) to the root end (61) of the blade (6).

3. A holding arrangement according to claim 1 or claim 2, wherein a frame (1, 2) is realised to be stacked on a further frame (1, 2) of the same type.

4. A holding arrangement according to any of the preceding claims, comprising a root end foot (4) realised to support the root portion (61) of the blade (6).

5. A holding arrangement according to claim 4, wherein the root end foot (4) comprises bolt cover portions realised for mounting over pinbolts (610) of the root end (61) of the blade (6).

6. A holding arrangement according to claim 4 or claim 5, wherein the root frame (1) is realised to accommodate the root end foot (4).

7. A holding arrangement according to any of the preceding claims, wherein a frame (1, 2) comprises a first interface portion (12, 22) for connecting with a second interface portion (14, 24) of a corresponding frame (1, 2).

8. A holding arrangement according to any of the preceding claims, comprising a mounting foot (5) realised for mounting to a surface of a transport means (7, 8) and/or storage facility.

9. A holding arrangement according to claim 8, wherein the mounting foot (5) comprises a mounting portion (52, 52') corresponding in shape to a frame interface portion (14, 24) of a frame (1, 2).

10. A holding arrangement according to any of the preceding claims, comprising a connecting strut (101) for connecting adjacent frames (1).

11. A holding arrangement according to claim 10, wherein the combined width of a connecting strut (101) and a root frame (1) corresponds essentially to the width of two airfoil frames (2).

12. A method of handling a number of wind turbine blades (6), which method comprises the steps of
- securing a root frame (1) to a root end (61) of a blade (6) ;
- arranging an airfoil clamp (3) about an airfoil portion of the blade (6); and
- mounting the airfoil clamp (3) onto an airfoil frame (1);
**characterized in that** the method comprises arranging the root frame (1) in a vertical blade orientation (V) in a first storage and transport stage of the blade (6); and arranging the root frame (1) in a horizontal blade orientation (H) in a second storage and transport stage of the blade (6); wherein the horizontal and vertical blade orientations (H, V) are essentially at right angles to each other.

13. A method according to claim 12, comprising the step of forming a vertical stack of blades (6) comprising a root frame stack (100) and a tip frame stack (200).

14. A method according to claim 12 or claim 13, comprising the step of forming an array (300) of vertical blade stacks.

15. A method according to any of claims 12 to 14, comprising the step of securing a root end foot (4) to the root end (61) of the blade (6) at an initial storage and transport stage and removing the root end foot (4) only after a final storage and transport stage.

## Patentansprüche

1. Windturbinenblatthalteanordnung (1, 2, 3) mit
- einem Wurzelgestell (1) zum Fixieren eines Wurzelabschnitts (61) eines Blatts (6),
- einer Schaufelprofileinspannung (3) zum Anordnen um einen Schaufelprofilabschnitt (62) des Blatts (6) herum und
- einem Schaufelprofilgestell (2) zum Halten der Schaufelprofileinspannung (3),
**dadurch gekennzeichnet, dass** das Wurzelgestell (1) und die Schaufelprofileinspannung (3) für die Verwendung in einer vertikalen Blattausrichtung (V) bei einer ersten Lagerungs- und/oder Transportphase des Blatts (6) sowie für die Verwendung in einer horizontalen Blattausrichtung (H) bei einer zweiten Lagerungs- und/oder Transportphase des Blatts (6) ausgelegt sind, wobei die horizontale und die vertikale Blattausrichtung (H, V) im Wesentlichen im rechten Winkel zueinander liegen.

2. Halteanordnung nach Anspruch 1, wobei das Wurzelgestell (1) eine Anzahl Wurzelendenhalterungen (10) umfasst, die zum Fixieren des Wurzelgestells (1) am Wurzelende (61) des Blatts (6) ausgelegt sind.

3. Halteanordnung nach Anspruch 1 oder 2, wobei ein Gestell (1, 2) so ausgelegt ist, dass es sich auf ein weiteres Gestell (1, 2) gleichen Typs stapeln lässt.

4. Halteanordnung nach einem der vorhergehenden Ansprüche, die einen Wurzelendenfuß (4) umfasst, der so ausgelegt ist, dass er den Wurzelabschnitt (61) des Blatts (6) trägt.

5. Halteanordnung nach Anspruch 4, wobei der Wurzelendenfuß (4) Bolzenabdeckabschnitte umfasst, die zum Anbringen auf Federbolzen (610) des Wurzelendes (61) des Blatts (6) ausgelegt sind.

6. Halteanordnung nach Anspruch 4 oder 5, wobei das Wurzelgestell (1) so ausgelegt ist, dass es den Wurzelendenfuß (4) aufnimmt.

7. Halteanordnung nach einem der vorhergehenden Ansprüche, wobei ein Gestell (1, 2) einen ersten Kontaktflächenabschnitt (12, 22) zum Verbinden mit einem zweiten Kontaktflächenabschnitt (14, 24) eines entsprechenden Gestells (1, 2) umfasst.

8. Halteanordnung nach einem der vorhergehenden Ansprüche, die einen Steckfuß (5) umfasst, der zum Anbringen an einer Fläche eines Transportmittels (7, 8) und/oder einer Lagereinrichtung ausgelegt ist.

9. Halteanordnung nach Anspruch 8, wobei der Steckfuß (5) einen Steckabschnitt (52, 52') umfasst, der von der Form her einem Gestellkontaktflächenabschnitt (14, 24) eines Gestells (1, 2) entspricht.

10. Halteanordnung nach einem der vorhergehenden Ansprüche, die eine Verbindungsstrebe (101) zum Verbinden benachbarter Gestelle (1) umfasst.

11. Halteanordnung nach Anspruch 10, wobei die Gesamtbreite einer Verbindungsstrebe (101) und eines Wurzelgestells (1) im Wesentlichen der Breite von zwei Schaufelprofilgestellen (2) entspricht.

12. Verfahren für den Umgang mit einer Anzahl Windturbinenblätter (6), das folgende Schritte umfasst:
- Fixieren eines Wurzelgestells (1) an einem Wurzelende (61) eines Blatts (6),
- Anordnen einer Schaufelprofileinspannung (3) um einen Schaufelprofilabschnitt des Blatts (6) herum und
- Anbringen der Schaufelprofileinspannung (3) an einem Schaufelprofilgestell (1),
**dadurch gekennzeichnet, dass** das Verfahren Folgendes umfasst: Anordnen des Wurzelgestells (1) in einer vertikalen Blattausrichtung (V) bei einer ersten Lagerungs- und/oder Transportphase des Blatts (6) und Anordnen des Wurzelgestells (1) in einer horizontalen Blattausrichtung (H) bei einer zweiten Lagerungs- und/oder Transportphase des Blatts (6), wobei die horizontale und die vertikale Blattausrichtung (H, V) im Wesentlichen im rechten Winkel zueinander liegen.

13. Verfahren nach Anspruch 12 mit dem Ausbilden eines vertikalen Stapels Blätter (6) mit einem Wurzelgestellstapel (100) und einem Spitzengestellstapel (200).

14. Verfahren nach Anspruch 12 oder 13 mit dem Ausbilden einer Gruppierung (300) vertikaler Blattstapel.

15. Verfahren nach einem der Ansprüche 12 bis 14 mit dem Fixieren eines Wurzelendenfußes (4) in einer ersten Lagerungs- und Transportphase an dem Wurzelende (61) des Blatts (6) und dem Entfernen des Wurzelendenfußes (4) erst nach einer letzten Lagerungs- und Transportphase.

## Revendications

1. Agencement de retenue de pale de turbine éolienne (1, 2, 3) comprenant
- un châssis de racine (1) pour la fixation sur une portion racine (61) d'une pale (6) ;
- un collier de surface portante (3) pour l'agencement autour d'une portion surface portante (62) de la pale (6) ; et
- un châssis de surface portante (2) pour le support du collier de surface portante (3) ;
**caractérisé en ce que** le châssis de racine (1) et le collier de surface portante (3) sont conçus pour une utilisation dans une orientation de pale verticale (V) dans un premier stade de stockage et/ou de transport de la pale (6) et également pour une utilisation dans une orientation de pale horizontale (H) dans un deuxième stade de stockage et/ou de transport de la pale (6), dans lequel les orientations de pale horizontale et verticale (H, V) sont essentiellement à angles droits l'une par rapport à l'autre.

2. Agencement de retenue selon la revendication 1, dans lequel le châssis de racine (1) comprend un certain nombre de supports d'extrémité de racine (10) conçus pour la fixation du châssis de racine (1) sur l'extrémité de racine (61) de la pale (6).

3. Agencement de retenue selon la revendication 1 ou la revendication 2, dans lequel un châssis (1, 2) est conçu pour être empilé sur un autre châssis (1, 2) du même type.

4. Agencement de retenue selon l'une quelconque des revendications précédentes, comprenant un pied d'extrémité de racine (4) conçu pour soutenir la portion racine (61) de la pale (6).

5. Agencement de retenue selon la revendication 4, dans lequel le pied d'extrémité de racine (4) comprend des portions couvercle à boulon conçues pour le montage par-dessus des boulons à goupille (610) de l'extrémité de racine (61) de la pale (6).

6. Agencement de retenue selon la revendication 4 ou la revendication 5, dans lequel le châssis de racine (1) est conçu pour accueillir le pied d'extrémité de racine (4).

7. Agencement de retenue selon l'une quelconque des revendications précédentes, dans lequel un châssis (1, 2) comprend une première portion interface (12, 22) pour le raccordement à une deuxième portion interface (14, 24) d'un châssis (1, 2) correspondant.

8. Agencement de retenue selon l'une quelconque des revendications précédentes, comprenant un pied de montage (5) conçu pour le montage sur une surface d'un moyen de transport (7, 8) et/ou d'une installation de stockage.

9. Agencement de retenue selon la revendication 8, dans lequel le pied de montage (5) comprend une portion de montage (52, 52') correspondant sur le plan de la forme à une portion interface de châssis (14, 24) d'un châssis (1, 2).

10. Agencement de retenue selon l'une quelconque des revendications précédentes, comprenant une bride de raccordement (101) pour le raccordement de châssis (1) adjacents.

11. Agencement de retenue selon la revendication 10, dans lequel la largeur combinée d'une bride de raccordement (101) et d'un châssis de racine (1) correspond essentiellement à la largeur de deux châssis de surface portante (2).

12. Méthode de manipulation d'un certain nombre de pales de turbine éolienne (6), laquelle méthode comprend les étapes consistant à
- fixer un châssis de racine (1) sur une extrémité de racine (61) d'une pale (6) ;
- agencer un collier de surface portante (3) autour d'une portion surface portante de la pale (6) ; et
- monter le collier de surface portante (3) sur un châssis de surface portante (1) ;
**caractérisée en ce que** la méthode comprend l'agencement du châssis de racine (1) dans une orientation de pale verticale (V) dans un premier stade de stockage et de transport de la pale (6) ; et l'agencement du châssis de racine (1) dans une orientation de pale horizontale (H) dans un deuxième stade de stockage et de transport de la pale (6) ; dans laquelle les orientations de pale horizontale et verticale (H, V) sont essentiellement à angles droits l'une par rapport à l'autre.

13. Méthode selon la revendication 12, comprenant l'étape de formation d'un empilement vertical de pales (6) comprenant un empilement de châssis de racine (100) et un empilement de châssis de pointe (200).

14. Méthode selon la revendication 12 ou la revendication 13, comprenant l'étape de formation d'un réseau (300) d'empilements de pales verticales.

15. Méthode selon l'une quelconque des revendications 12 à 14, comprenant l'étape de fixation d'un pied d'extrémité de racine (4) sur l'extrémité de racine (61) de la pale (6) à un stade de stockage et de transport initial et de retrait du pied d'extrémité de racine (4) seulement après un stade de stockage et de transport final.
